# EUROPEAN PATENT SPECIFICATION

(11) **EP 1 742 439 B1**
(45) Date of publication and mention of the grant of the patent: **13.08.2008**
(21) Application number: 06012214.0
(22) Date of filing: 14.06.2006
(51) Int. Cl.: H04L 29/06

(54) **SIP server, terminal device, subscriber information management device and communication control method**
SIP Server, Terminaleinrichtung, Teilnehmerinformationsverwaltungseinrichtung und Kommunikationskontrollverfahren
Serveur SIP, dispositif terminal, dispositif de gestion d'information d'abonné et procédé de contrôle de communication

(30) Priority: 08.07.2005 JP 2005200753
(43) Date of publication of application: 10.01.2007
(73) Proprietor: NTT DoCoMo INC., Chiyoda-ku Tokyo 100-6150 (JP)
(72) Inventor: Yoshida, Naomasa Intellectual Property Department, 2-chome Chiyoda-ku Tokyo 100-6150 (JP); Hayashi, Yosuke Intellectual Property Department, 2-chome Chiyoda-ku Tokyo 100-6150 (JP); Otsuki, Katsunobu Intellectual Property Department, 2-chome Chiyoda-ku Tokyo 100-6150 (JP)
(74) Representative: Sparing Röhl Henseler Patentanwälte European Patent Attorneys

(56) References cited:
- US-A1- 2003 217 174
- US-A1- 2005 063 329
- YI-BING LIN ET AL: "A Push Mechanism for GPRS SupportingPrivate IP Addresses" IEEE COMMUNICATIONS LETTERS, IEEE SERVICE CENTER, PISCATAWAY, NJ, US, vol. 7, no. 1, January 2003 (2003-01), XP011066479 ISSN: 1089-7798

## Description

The present invention relates to SIP servers, terminal devices, subscriber information management devices, and communication control methods, according to claims 1, 4, 6, and 7, respectively, and more particularly to a SIP server, a terminal device, a subscriber information management device, and a communication control method for making a connection achievable even if a SIP request is received in a state in which a communication channel has not been established and Registration has not been completed.

SIP (Session Initial Protocol) is known as one of the protocols used in a radio access network of a mobile communication network (for example, see J. Rosenberg, H. Schulzrinne, G. Camarillo, A. Johnston, J. Peterson, R. Sparks, M. Handley, and E. Shooler, "SIP: session initiation protocol, " RFC 3261, Internet Engineering Task Force, June 2002). Conventionally, in a terminal device to be served by a communication service using the SIP, a connection control of SIP has been implemented on condition that establishment of a communication channel for transmitting data and Registration by SIP is always performed. In other words, there is no connection control method when a communication channel and Registration which are necessary for receiving a SIP request are not established. There is a need for the present method such as in an environment in which there are many users relative to a network equipment and therefore radio communication resources need to be more efficient to maintain a communication channel.

In addition, general "Registration", which is defined also in 3GPP, is a procedure in which a SIP server queries a subscriber information management device which manages a location information and the SIP server is notified of a current location of a subscriber.

As described above, when both a communication channel and Registration have not been established, a method for notifying a terminal device that a SIP request is being sent and a process for establishing a transaction after notification are needed. In this case, a function to prompt establishment of a communication channel and Registration in sequence, and a function to synchronously control states of a communication channel and Registration are needed. Thus, synchronous control of establishments is required to be performed in a way in which a process of establishing a communication channel is performed before a Registration process and then both of them are made established. The reason why the synchronous control of establishments is performed in this way is that a SIP request cannot be delivered to a terminal device when either a communication channel or Registration has not been established.

In addition, by a notification of a state of the terminal device to the network side, an acceptance or rejection of establishment of a transaction can be controlled according to a state of the terminal device. Known from US 2003/217174 A1, the article of Yi-Bing Lin et al., "A push mechanism for GPRS supporting private IP addresses", IEEE communications letters, vol. 7, no. 1, and US 2005/063329 A1 is a SIP server, a terminal device, and a communication control method according to the preamble of claims 1, 4 and 10, respectively. Known from these documents is also a subscriber information management device. The present invention is devised to solve the problems of the conventional art described above, and an object of the present invention is to provide a SIP server, a terminal device, a subscriber information management device, and a communication control method which can receive a SIP request from a calling party and establish a transaction when both a communication channel for reception and Registration of a called terminal device have not been established.

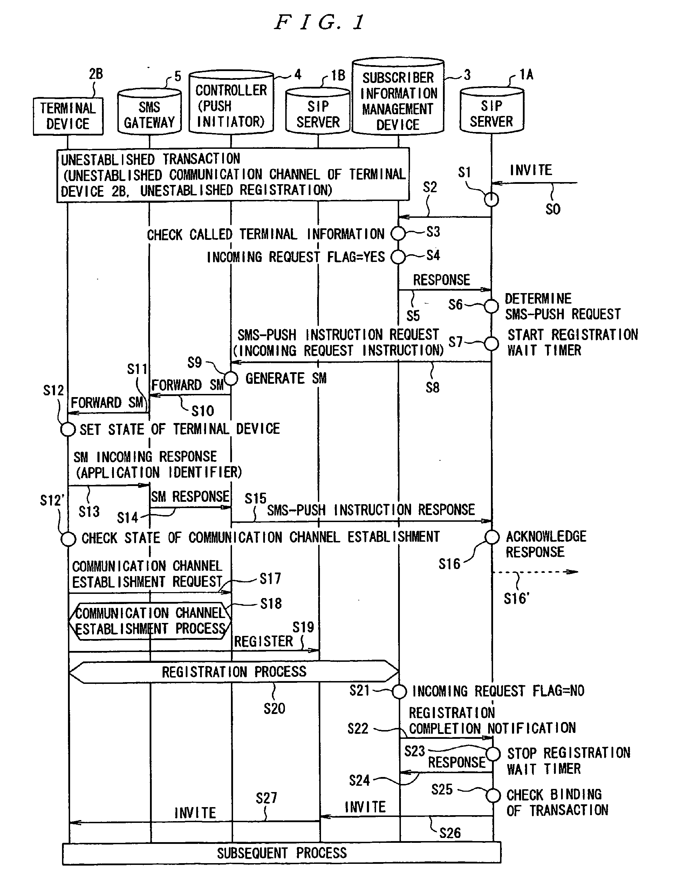

A SIP server according to claim 1 solves the problem. By configuring the SIP server in this manner, when there is a request from the calling terminal, a control signal can be sent to prompt establishment of a communication channel and Registration process and a transaction can be established. This control signal is, for example, a short message, and the present SIP server has a function to instruct to send a short message which represents that establishment of a transaction is requested to a called terminal device, using SMS-Push technology as the control signal sending means. In other words, this short message includes an instruction to request processing for reception, and prompts the called terminal device to perform a process of establishing a communication channel and a process of sending a SIP REGISTER message. When an application identifier is contained in a response message responding to a reception of a short message, the SIP server recognizes that an instruction of the short message is accepted by the terminal device and then continues the incoming process. On the other hand, when a response message containing a reason of non-response is sent back (step S16' in FIG. 1), the incoming process which has been suspended is aborted instantly using SIP CANCEL or the like, the Registration wait timer of the SIP server is reset to be stopped, and an originator which has requested a SIP INVITE is notified of a reason why a transaction establishment process is aborted.

A SIP server may further comprise an identification information storing means for storing identification information to uniquely identify the request message from the called terminal device, wherein a request message corresponding to identification information stored in the identification information storing means is sent to said called terminal device after the state is changed to a state in which said communication channel has been established and said SIP transaction has been established. In the SIP server, a transaction identifier for uniquely identifying a transaction that is requested by the request message or SIP INVITE is managed. When the SIP server receives a SIP INVITE message including a transaction identifier (such as Call-ID) (step S0 in FIG. 1), the SIP server reserves this transaction identifier, and identifies which SIP INVITE has been held for which incoming call in cooperation with a subscriber management device. After which SIP INVITE corresponds to a transaction to be continued is checked at the SIP server (transaction binding check), such a SIP INVITE (step S14 in FIG. 1) is transferred to the called terminal device through a called SIP server.

Further, a SIP server may further comprise a Registration wait timer which is started when the control signal is sent, wherein the SIP transaction establishment process is terminated when the Registration wait timer expires. Thus, the calling terminal device which sent the request message can be notified that the SIP transaction establishment process is aborted when the Registration wait timer expires.

A terminal device according to claim 4 solves the problem.. By configuring the terminal device in this manner, when there is a request from the calling terminal, a control signal can be obtained to perform the establishment of the communication channel and the Registration process, and a transaction can be established.

By performing a process in this manner, it is allowed that a reception process corresponding to an application identifier is continued, or, in accordance with a reason of non-response, a reception process is aborted instantly, a Registration wait timer is reset to be stopped, and a calling terminal device which has sent a SIP request is notified of a reason why the transaction establishment process is aborted.

A terminal device may further comprise a canceling means for canceling the state in which the communication channel has been established when the state in which the SIP transaction has been established is cancelled. By synchronously controlling a state in which a SIP transaction is established and a state in which a communication channel is established, radio resources can be utilized effectively.

A subscriber information management device according to the present invention comprises a flag storing means for storing a flag which indicates that a communication channel has been established and a flag which indicates that a SIP transaction has been established, an incoming request flag storing means for storing an incoming request flag which indicates that there is an incoming request when a request message by SIP from another device is obtained in a case where such a flag has been stored in the flag storing means, and a notifying means for notifying the another device in response to establishment of the communication channel and said SIP transaction in a case where the incoming request flag is set. The incoming request flag is controlled by the subscriber information management device in a way in which the incoming request flag is set (the incoming request flag=YES) while a Registration process is being performed, and the incoming request flag is unset (the incoming request flag=NO) when all processes are completed, so that the incoming request flag can be set when the request is received, and the incoming request flag can be unset when all of a sending of the short message, establishment of the communication channel, and the Registration process are completed. Then, an operation in a case where another request is received while an incoming request flag is set depends on a tolerance of a service or a capability of a terminal device or network. For example, in a case where prioritizes a first request of a first call and provides a service which cannot tolerate a plurality of transactions, while an incoming request flag is set, a busy response is sent even if a request of a second call is received. A SIP server which received this busy response can send a busy message to a terminal device that originates the request of the second call instead of sending a short message.

A communication control method according to claim 7 solves the problem.

As described above, the present invention has an advantage that radio resources for maintaining a communication channel can be used efficiently such as in an environment in which there are many users relative to a network equipment and therefore radio communication resources need to be more efficient, by synchronously controlling a communication channel establishment process and a Registration process by SIP in a way in which a SIP request from the calling terminal is received and a transaction is established when in a state in which both the communication channel for reception and the Registration of a called terminal device have not been established.

Further objects, advantages and embodiments may be taken from the following description.

The invention will now be described in connection with embodiments illustrated in the attached drawings.
FIG. 1 is a sequence diagram which shows an example operation which proceeds through a communication channel establishment process and a Registration process to a state in which VolP service is available;
FIG. 2 is a block diagram which shows an example of entire configuration of a communication control system composed of a SIP server, a subscriber information management device, a terminal device and the like according to the present invention;
FIG. 3 is a block diagram which shows a configuration example of a SIP server 1 A in FIG. 2;
FIG. 4 is a block diagram which shows a configuration example of a subscriber information management device 3 in FIG. 2;
FIG. 5 is a block diagram which shows a configuration example of a terminal device 2B in FIG. 2;
FIG. 6 is a diagram which shows a procedure for controlling other calls by an incoming request flag; and
FIG. 7 is a sequence diagram which shows an abortion process of a Registration process.

Embodiments of the present invention will be described below with references to the drawings. In figures referred to in the following descriptions, equivalent portions through figures are denoted by the same reference numeral.

### (System configuration example)

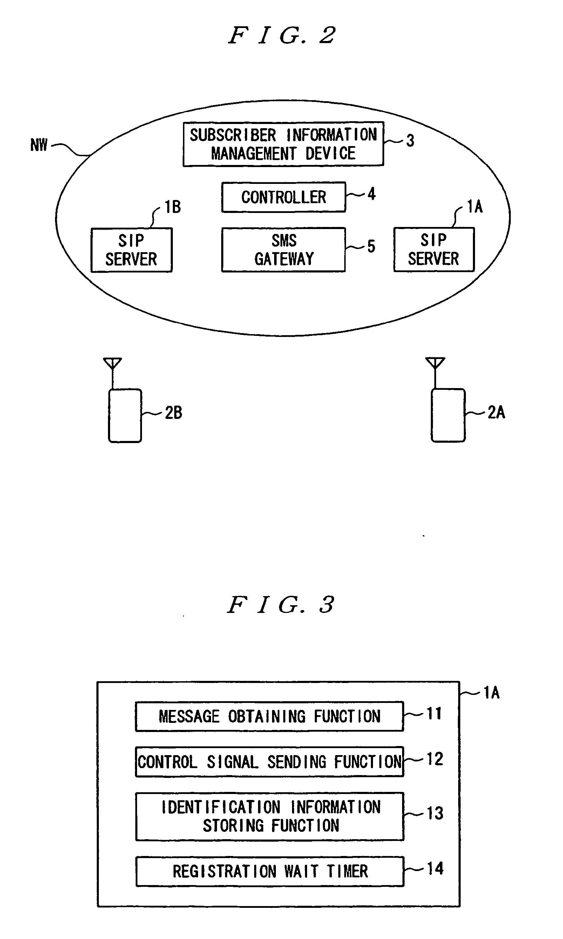

FIG. 2 is a block diagram which shows an example of entire configuration of a communication control system composed of a SIP server, a subscriber information management device, a terminal device, and the like according to the present invention. In this Figure, a terminal device 2A which is used by a user A, a terminal device 2B which is used by a user B, and a network NW which provides a communication service to these terminal devices 2A and 2B. The network NW includes SIP servers 1A and 1 B, a subscriber information management device 3 which manages subscriber information, a controller 4 which functions as a push initiator that creates a short message, and an SMS gateway 5 which transfers the short message.

As shown in FIG. 3, the SIP server 1A comprises a message obtaining function 11 for obtaining a request message by SIP from a calling terminal device, a control signal sending function 12 for sending a control signal for prompting establishment of a communication channel and a registration process to a called terminal device, an identification information storing function 13 for storing identification information for uniquely identifying a request message from the calling terminal device, and a Registration wait timer 14 which is started when a control signal is sent. The registration wait timer 14 is a timer which indicates an expiration time by which a Registration process is completed. A general computer in which a CPU, a ROM, a RAM, an interface, and so on are connected via a bus is used as the SIP server 1A, and the above each function is realized by them.

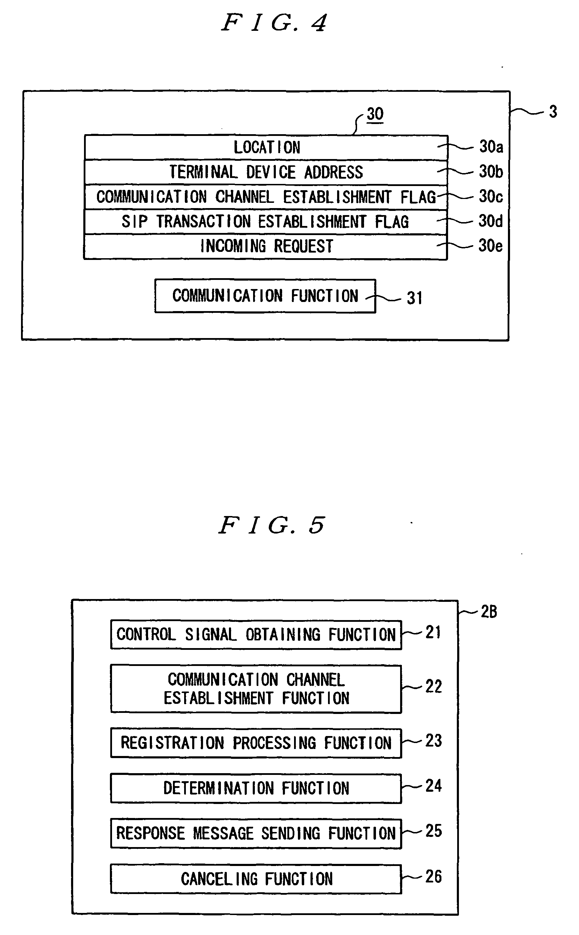

The subscriber information management device 3 is, for example, an HLR (Home Location Register) or an HSS (Home Subscriber Server). As shown in FIG. 4, the subscriber information management device 3 comprises a storage portion 30 and a notification function 31 for notifying another device in response to establishment of the communication channel and the SIP transaction in a case where the incoming request flag 30E is set. The storage portion 30 stores a location information 30A of the terminal device, address information 30B of the terminal device, a communication channel establishment flag 30C which indicates that a communication channel has been established, a SIP transaction establishment flag 30D which indicates a SIP transaction has been established, an incoming request flag 30E which indicates that there is an incoming request when a request message is obtained by SIP from another device in a case where the communication channel establishment flag 30C and the SIP transaction establishment flag 30D are set. Further, the storage portion 30 stores other various types of information.

Since subscriber information such as whether or not a communication channel is established or whether or not a Registration process is performed is registered in the subscriber information management device 3 in this way, registered subscriber information is inquired from the SIP server 1A. A general computer in which a CPU, a ROM, a RAM, an interface, and so on are connected via a bus is used as the subscriber information management device 3, and the above each function is realized by them.

As shown in FIG. 5, the terminal device 2B comprises a control signal obtaining function 21 for obtaining a control signal for prompting establishment of a communication channel and a Registration process, a communication channel establishment processing function 22 for performing the communication channel establishment process in response to acquisition of the control signal, a Registration processing function 23 for performing the Registration process after the communication channel is established, a determining function 24 for determining whether or not the device can perform the communication channel establishment process and the Registration process when the control signal is obtained, a response message sending function 25 for sending a response message containing an identifier for identifying an application started by the device if it is determined that the communication channel establishment process and the Registration process can be performed, and for sending a response message containing a reason why the communication channel establishment process and the Registration process are not to be performed if these process are not to be performed, and a canceling function 26 for canceling the state in which the communication channel has been established when the state in which the SIP transaction has been established is cancelled. This terminal device 2B is a general cellular phone or the like which includes, for example, a CPU, a ROM, a RAM, an interface, and so on to realize the above each function. In the present example, the terminal device 2A is a calling terminal, and the terminal device 2B is a called device. Additionally, the server 1A is a calling SIP server, and the server 1 B is a called SIP server.

### (Example operation)

FIG. 1 is a sequence diagram which shows an example operation from sending of an INVITE message through the communication channel establishment process and the Registration process to a state in which VoIP (Voice over IP) service is available. In this diagram, the called terminal device 2B, the SMS gateway 5, the controller 4, the SIP server 1 B, the subscriber information management device 3, and the SIP server 1A are included.

In this example, the terminal device 2B of the user B is assumed to be in a state in which both a communication channel and a Registration have not been established. Under this condition, for establishing a VoIP transaction with the user B, a SIP INVITE message is sent from the calling terminal device 2A of the user A to the terminal device 2B of the user B (step S0). The SIP server 1A which has received this SIP INVITE message stores a transaction identifier (such as a Call-ID) of the INVITE message (step S1). Then, the SIP server 1A queries the subscriber information terminal device 3 for information of called terminal device (hereinafter referred to as a "query about called terminal information") to detect a SIP server that will be a forwarding destination of the INVITE message (step S2). In response to this query, the subscriber information management device 3 checks the called terminal information (step S3).

However, even if this query is performed, the SIP message cannot be received since a communication channel has not been established, and a SIP server to which the SIP INVITE is forwarded cannot be detected since the Registration process has not been performed. In other words, though a current location of the called terminal and a Registration state are checked at the subscriber information management device 3, it is not ready to perform an incoming process by INVITE since the terminal device 2B of the user B is in a state in which Registration has not been completed.

Then, the subscriber information management device 3 sets an incoming request flag (the incoming request flag=YES) to indicate that it asks an incoming on the terminal device 2B (step S4). The subscriber information management device 3 then sends a response to the SIP server 1A and notifies it that the incoming request flag is set (step S5). In the present example, the SIP server 1A which received this response determines that it will perform an SMS-Push request toward the called terminal device 2B (step S6). SMS-Push is a scheme to send a short message from server side without a request from a receiving client. In other words, a SIP server determines whether or not it instructs to send a short message based on a result of a query about called terminal information. An address of the called terminal device 2B is specified to the SMS-Push request.

In a case where the SMS-Push request is performed, incoming control by a SIP INVITE request is on hold until communication channel establishment and a Registration process of a called party are completed. For this reason, the SIP server 1 A starts a Registration wait timer and manages progress of the Registration process while holding an INVITE process (step S7). Further, using SMS-Push technology, the SIP server 1A instructs the controller 4 about a short message (hereinafter called an "SM") send request for prompting establishment of a communication channel and Registration (step S8). In this SM send request, an address of the terminal device 2B is specified so that this request becomes a request for establishing a VoIP transaction. The controller 4 which received the SM send request generates an SM (step S9) and sends it toward the terminal device 2B (step S10). The SMS gateway 5 which received this SM forwards it to the terminal device 2B (step S11).

The terminal device 2B checks a state of the terminal device when receiving this SM (step S12). In this example, race conditions with other communication services is checked. Then, if the communication service competes with others, an identifier of the communication service or application is included in an SM incoming response and sent (step S13). For example, in a case where an imode (R) service is already provided to the terminal device 2B, the terminal device 2B starts an application for VolP if it is in an environment in which establishment of another communication channel and a Registration process can be performed in sequence. Then, an identifier of the started VolP application is added to the SM incoming response (step S13). Whether an application of the terminal device 2B can be started or not, a selection of an application to be started, and an operation after an application started are determined by an instruction included in the SM.

On the other hand, a reason of non-response is added to the SM incoming response if the terminal device 2B cannot start the VoIP application (step S13). For example, depending on a capability of the terminal device, it is assumed that the VoIP service cannot be used while imode (R) service is provided, and if so, the reason of non-response is added to the SM incoming response. The SM incoming response which is sent form the terminal device 2B goes through the SMS gateway 5 as it is, and goes through the controller 4 as an SM response (step S14), and is sent back to the SIP server 1A (step S15). The SIP server 1A which received this SM response checks its content (step S16).

If a reason of non-response is added to the SM incoming response as a result of checking, the SIP server 1A aborts the INVITE message sending process that has been held, and notifies the calling terminal device 2A (see FIG. 2) of the reason of non-response (step S16'). The calling terminal device 2A which received this notification can perform a CANCEL process. By doing this, the relevant process can be aborted at an early timing before the Registration wait timer expires.

In the present example, it is assumed that the terminal device 2B can perform a VoIP response and therefore a VoIP application identifier is added to the SM incoming response. In this case, a communication channel establishment request is sent from the terminal device 2B to the controller 4 (step S17), and a communication channel establishment process is performed (step S18). Then, a REGISTER message is sent from the terminal device 2B to the controller 4 (step S19), and a Registration process is performed (step S20). In the present example, it is assumed that the communication channel has not been established. If there is a communication channel already established, an establishment state of the communication channel is checked by the terminal device (step S12'), and step S17 and subsequent communication channel establishment process is not performed.

The subscriber information management device 3 unsets the incoming request flag (the incoming request flag=NO) (step S21) at the same time that Registration process is completed, and sends a Registration completion notification to the SIP server 1A (step S22). The server 1A which received this notification stops the Registration wait timer (step S23), and sends back a reception acknowledge response (step S24).

Then, the SIP server 1A checks which INVITE process that has been held should be resumed for which incoming call, that is, binding of transactions (step S25). In this example, since the transaction identification of the INVITE message is stored at step S1, a bound transaction can be identified. Upon identifying such transaction, the SIP server 1A resumes the INVITE process which has been held, and sends INVITE message containing the transaction identifier (step S26). This INVITE message is sent to the terminal device 2B of the user B through the SIP server 1 B (step S27). The terminal device 2B which received this INVITE message sends 200OK signal and so on, and then it can start a VolP service or the like between it and the terminal device 2A. In the example operation described above, though an SM which can be sent immediately from a state in which a communication channel has not been established is used, other control signals may be used. That is to say, instead of a short message send submission (SMS-Push), a dedicated signal for prompting communication channel establishment and Registration process may be predefined and transmitted.

### (Control of other calls using an incoming request flag)

As described above, in the present system, by controlling the incoming request flag at the subscriber information management device 3, the incoming request flag is set (the incoming request flag=YES) while a Registration process is being performed, and the incoming request flag is unset (the incoming request flag=NO) when all processes are completed. In other words, in the subscriber information management device 3 of the present system, the incoming request flag is set when a request for query about called terminal information is received from a SIP server which received an INVITE message (the SIP server 1A in the above example), and the incoming request flag is unset when all of a sending of SM, a communication channel establishment process, and a Registration process are completed.

Then, an operation in a case where another SIP INVITE message is received while the incoming request flag is set (the incoming request flag=YES) depends on a tolerance of a service or a capability of a terminal device or network. For example, in a case where prioritizes a first INVITE message of a first call and provides a service which cannot tolerate a plurality of transactions, while the incoming request flag is set, the subscriber information management device 3 sends a busy response message in response to a request for query about called terminal information from a SIP server even if an INVITE message of a second call is received. The SIP server which received this busy response message sends a busy response message to an originator of the INVITE message of the second call instead of sending an SM.

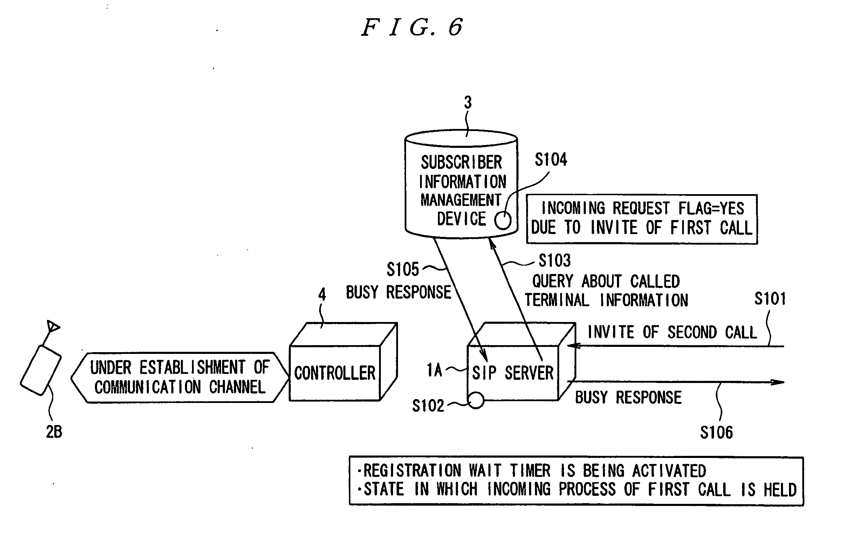

Therefore, as shown in FIG. 6, when a communication channel establishment process is performed between the called terminal device 2B and the controller 4, if an INVITE message of Nth call (hereinafter N is an integer greater or equal to 2) is inputted into the SIP server 1A (step S101), the SIP server 1A has an active Registration wait timer and is in a state in which an incoming process of the first call has been held (step S102). For this reason, the SIP server 1A queries the subscriber information management device 3 for called terminal information (step S103). Then, since an operation about the INVITE message of the first call is being performed, the incoming request flag has been set (the incoming request flag=YES) (step S104). For this reason, the subscriber information terminal device 3 sends a busy response message (step S105), and this busy response message is sent back to a terminal device that originates an INVITE message of Nth call (step S106). As described above, in the present system, first incoming is processed by priority regarding incoming calls.

### (Abortion of Registration process)

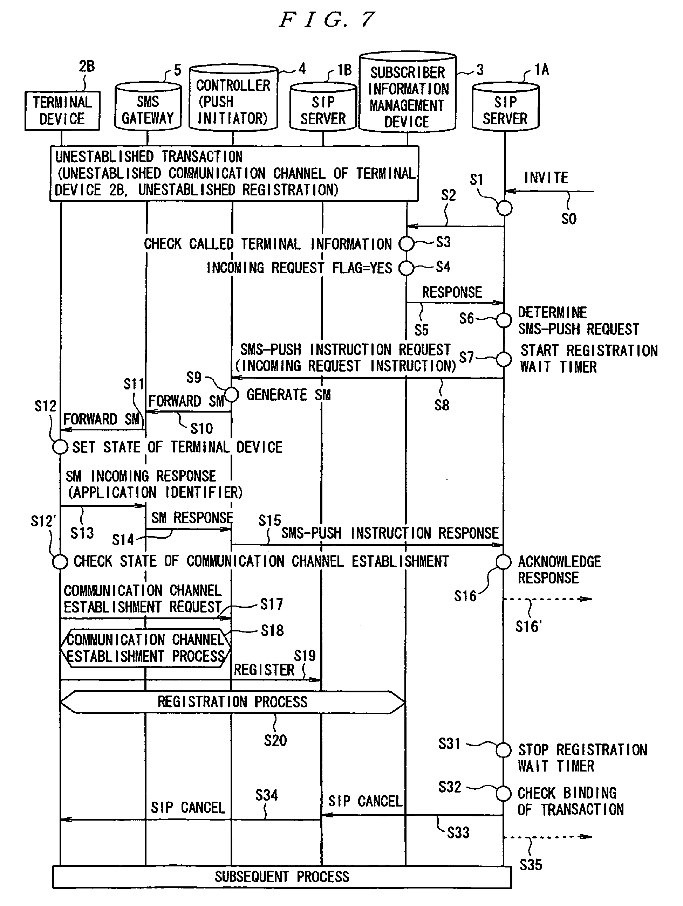

When the Registration wait timer which is started at step S7 in FIG. 1 expires, the Registration process is aborted. A process of this case will be described with reference to FIG. 7. When the Registration wait timer expires, the SIP server 1A resets to stop its timer (step S31). Then, the SIP server 1A checks binding of transactions to determine which INVITE process should be aborted (step S32). Then, the SIP server 1A sends a SIP CANCEL message toward the terminal device 2B (step S33) to abort a transaction establishment process which is carried on by the INVITE request. This SIP CANCEL message is sent to the terminal device 2B of the user B through the SIP server 1 B (step S34). The terminal device 2B which received this SIP CANCEL message aborts the transaction establishment process. In addition, the SIP server 1A notifies the calling terminal device which originates the INVITE message of a reason why the above process is aborted (for example, timeout) (step S35).

### (Release of Registration and communication channel)

Incidentally, for the purpose of effective use of resources, the system may be designed to release a Registration and a communication channel at the same time when an application which runs over a transaction established by INVITE is terminated. This operation can be realized by a general transaction releasing procedure, for example, by a mechanism which proceeds to a releasing procedure to release a Registration and a communication channel by a trigger such as a SIP BYE. On the other hand, if the purpose is to shorten a time for transferring a subsequent SIP request to a called terminal, or if it is obvious that another transaction is established subsequently, releasing of a Registration and a communication channel is not required to be synchronized with the time when the application is terminated (such as when end of call).

### (Conclusion)

The present system has a function to establish a communication channel and perform Registration using a terminal device, a SIP server, and a subscriber information management device. The terminal device performs communication channel establishment and Registration in sequence upon receiving a short message containing an incoming request instruction. A state of establishment or non-establishment of a communication channel can be controlled among the terminal device and each device on network side by a conventional scheme, and the terminal device and each device on network side synchronize a state of establishment of the communication channel and a state of the Registration process. In other words, when a short message is received by the terminal device, the Registration process is performed in a state in which the communication channel has been established.

By the way, if an available communication channel is already established when the short message is received, the existing communication channel can be used without establishment of a new communication channel by the terminal device. In this case, the terminal device checks whether or not an available communication channel is already established, and establishes a new communication channel and then performs Registration if necessary. A procedure for releasing and establishing a communication channel and Registration itself is the same as a procedure of the conventional scheme.

### (Communication control method)

In the system described above, a communication channel as will be described below is employed. That is, a communication control method for providing a communication service in a state in which a communication channel has been established and a SIP transaction has been established is employed, and the method comprises a message obtaining step for obtaining a request message by SIP from a calling terminal device in a state in which the communication channel has not been established and a state in which the SIP transaction has not been established (corresponding to step S0 in FIG. 1), a control signal sending step for sending a control signal for prompting establishment of the communication channel and Registration process to a called terminal device in response to acquisition of the request message in the message obtaining step (corresponding to step S8 in FIG. 1), a communication channel establishment processing step for performing a process for establishing the communication channel after the control signal is sent in the control signal sending step (corresponding to step S17 and S18 in FIG. 1), and a SIP transaction establishment processing step for performing a process for establishing a SIP transaction after the communication channel establishment process is performed by the communication channel establishment processing step (corresponding to step S19 and S20 in FIG. 1).

By performing processes in this manner, when there is a request from the calling terminal, the control signal can be sent to prompt the establishment of a communication channel and a Registration process, a transaction can be established. In other words, radio resources for maintaining a communication channel can be used efficiently by synchronously controlling the communication channel establishment process and the Registration process by SIP in a way in which a SIP request is received and a transaction is established when in a state in which both the communication channel for reception and the Registration of the called terminal device have not been established.

The present invention is applied to a case where synchronously controls a communication channel establishment process and a Registration process by SIP.

## Claims

1. A SIP server (1A, 1B) for providing a communication service to a terminal device (2A, 2B) in a state in which a communication channel has been established and a state in which a SIP transaction has been established, said server (1 A, 1B) comprising:
a message obtaining means (11) for obtaining a request message by SIP from a calling terminal device (2A, 2B) in a state in which the communication channel has not been established and a state in which the SIP transaction has not been established; and
a control signal sending means (12) for sending a control signal for prompting establishment of the communication channel and a Registration process to a called terminal device (2A, 2B) in response to acquisition of the request message by said message obtaining means (11), **characterized in that** said SIP server is adapted to continue an incoming process corresponding to an identifier if said identifier for identifying an application started by called terminal device (2A, 2B) is contained in a response message obtained from the called terminal device (2A, 2B), and to perform a process to abort the incoming process if a reason why a communication channel establishment process and Registration process are not performed is contained in said response message.

2. The SIP server (1A, 1B) according to claim 1 further comprising an identification information storing means (13) for storing identification information to uniquely identify said request message from the called terminal device (2A, 2B), wherein a request message corresponding to identification information stored in said identification information storing means (13) is sent to said called terminal device (2A, 2B) after the state is changed to a state in which said communication channel has been established and said SIP transaction has been established.

3. The SIP server according to claim 1 further comprising a Registration wait timer (14) which is started when said control signal is sent, wherein said SIP transaction establishment process is terminated when said Registration wait timer (14) expires.

4. A terminal device (2A, 2B) for obtaining provision of a communication service in a state in which a communication channel has been established and a state in which a SIP transaction has been established, said device (2A, 2B) comprising:
a control signal obtaining means (12) for obtaining a control signal for prompting establishment of a communication channel and a Registration process;
a communication channel establishment processing means (22) for performing said communication channel establishment process in response to acquisition of said control signal; and
a Registration processing means (23) for performing said Registration process after the communication channel is established by said communication channel establishment processing means (22), **characterized by** a response message sending means (25) for sending a response message containing an identifier for identifying an application started by the terminal device (2A, 2B) if a determining means (24) determines that said communication channel establishment process and said Registration process can be performed, and for sending a response message containing a reason why said communication channel establishment process and said Registration process are not to be performed if said communication channel establishment process and said Registration process are not to be performed.

5. The terminal device (2A, 2B) according to claim 4 further comprising a canceling means (26) for cancelling said state in which the communication channel has been established when said state in which the SIP transaction has been established is cancelled.

6. A subscriber information management device (3) comprising:
a flag storing means for storing a flag which indicates that a communication channel has been established and a flag which indicates that a SIP transaction has been established;
an incoming request flag storing means for storing an incoming request flag which indicates that there is an incoming request when a request message by SIP from another device is obtained in a case where such a flag has been stored in said flag storing means; and
a notifying means for notifying said another device in response to establishment of said communication channel and said SIP transaction in a case where said incoming request flag is set.

7. A communication control method for providing a communication service to a terminal device (2A, 2B) in a state in which a communication channel has been established and a state in which a SIP transaction has been established, said method comprising:
a message obtaining step for obtaining a request message by SIP from a calling terminal device (2A, 2B) in a state in which the communication channel has not been established and a state in which the SIP transaction has not been established;
a control signal sending step for sending a control signal for prompting establishment of the communication channel and Registration process to a called terminal device (2A, 2B) in response to acquisition of the request message in said message obtaining step;
a communication channel establishment processing step for performing a process for establishing said communication channel after said control signal is sent in said control signal sending step; and
a SIP transaction establishment processing step for performing a process for establishing a SIP transaction after the communication channel establishment process is performed by said communication channel establishment processing step, **characterized by** a step which continues an incoming process corresponding to an identifier if said identifier for identifying an application started by the called terminal device (2A, 2B) is contained in a response message obtained from the called terminal device (2A, 2B), and performs a process to abort the incoming process if a reason why a communication channel establishment process and Registration process are not performed is contained in said response message.

## Patentansprüche

1. SIP-Server (1A, 1B) für die Bereitstellung eines Kommunikationsdienstes für ein Endgerät (2A, 2B) in einem Zustand, in dem ein Kommunikationskanal eingerichtet worden ist, und einem Zustand, in dem eine SIP-Transaktion eingerichtet worden ist, wobei der Server (1A, 1 B) umfasst:
ein Nachrichtenerhaltungsmittel (11) zum Erhalten einer Anforderungsnachricht durch das SIP von einem anrufenden Endgerät (2A, 2B) in einem Zustand, in dem der Kommunikationskanal nicht eingerichtet worden ist, und einem Zustand, in dem die SIP-Transaktion nicht eingerichtet worden ist; und
ein Steuersignal-Sendemittel (12) zum Senden eines Steuersignals, um in Reaktion auf die Erfassung der Anforderungsnachricht durch das Nachrichtenerhaltungsmittel (11) ein angerufenes Endgerät (2A, 2B) zum Einrichten des Kommunikationskanals und zu einem Registrierungsprozess aufzufordern, **dadurch gekennzeichnet, dass** der SIP-Server dazu ausgelegt ist, einen eingehenden Prozess, der einem Identifizierer entspricht, fortzusetzen, falls der Identifizierer zum Identifizieren einer Anwendung, die durch das angerufene Endgerät (2A, 2B) gestartet wird, in einer von dem angerufenen Endgerät (2A, 2B) erhaltenen Antwortnachricht enthalten ist, und um einen Prozess zum Abbrechen des eingehenden Prozesses auszuführen, falls in der Antwortnachricht ein Grund enthalten ist, aus dem ein Kommunikationskanal-Einrichtungsprozess und ein Registrierungsprozess nicht ausgeführt werden sollen.

2. SIP-Server (1A, 1B) nach Anspruch 1, der ferner ein Identifizierungsinformation-Speichermittel (13) zum Speichern von Identifizierungsinformationen, um die Anforderungsnachricht von dem angerufenen Endgerät (2A, 2B) eindeutig zu identifizieren, umfasst, wobei eine Anforderungsnachricht, die einer in dem Identifizierungsinformation-Speichermittel (13) gespeicherten Identifizierungsinformation entspricht, zu dem angerufenen Endgerät (2A, 2B) gesendet wird, nachdem der Zustand in einen Zustand geändert worden ist, in dem der Kommunikationskanal eingerichtet worden ist und die SIP-Transaktion eingerichtet worden ist.

3. SIP-Server nach Anspruch 1, der ferner einen Registrierungs-Wartezeitgeber (14) umfasst, der gestartet wird, wenn das Steuersignal gesendet wird, wobei der SIP-Transaktions-Einrichtungsprozess beendet wird, wenn der Registierungs-Wartezeitgeber (14) abgelaufen ist.

4. Endgerät (2A, 2B) zum Erhalten der Bereitstellung eines Kommunikationsdienstes in einem Zustand, in dem ein Kommunikationskanal eingerichtet worden ist, und einem Zustand, in dem eine SIP-Transaktion eingerichtet worden ist, wobei die Vorrichtung (2A, 2B) umfasst:
ein Steuersignal-Erhaltungsmittel (12) zum Erhalten eines Steuersignals, um zum Einrichten eines Kommunikationskanals und zu einem Registrierungsprozess aufzufordern;
ein Kommunikationskanal-Einrichtungsverarbeitungsmittel (22) zum Ausführen des Kommunikationskanal-Einrichtungsprozesses in Reaktion auf die Erfassung des Steuersignals; und
ein Registrierungsverarbeitungsmittel (23) zum Ausführen des Registrierungsprozesses, nachdem der Kommunikationskanal durch das Kommunikationskanal-Einrichtungsverarbeitungsmittel (22) eingerichtet worden ist, **gekennzeichnet durch** ein Antwortnachricht-Sendemittel (25) zum Senden einer Antwortnachricht, die einen Identifizierer zum Identifizieren einer **durch** das Endgerät (2A, 2B) gestarteten Anwendung enthält, falls ein Bestimmungsmittel (24) bestimmt, dass der Kommunikationskanal-Einrichtungsprozess und der Registrierungsprozess ausgeführt werden können, und zum Senden einer Antwortnachricht, die einen Grund enthält, aus dem der Kommunikationskanal-Einrichtungsprozess und der Registrierungsprozess nicht ausgeführt werden sollen, falls der Kommunikationskanal-Einrichtungsprozess und der Registrierungsprozess nicht ausgeführt werden sollen.

5. Endgerät (2A, 2B) nach Anspruch 4, das ferner ein Beendigungsmittel (26) umfasst, um den Zustand zu beenden, in dem der Kommunikationskanal eingerichtet worden ist, wenn der Zustand, in dem die SIP-Transaktion eingerichtet worden ist, beendet worden ist.

6. Teilnehmerinformation-Managementvoi-richtung (3), die umfasst:
ein Flag-Speichermittel zum Speichern eines Flags, das angibt, dass ein Kommunikationskanal eingerichtet worden ist, und eines Flags, das angibt, dass eine SIP-Transaktion eingerichtet worden ist;
ein Speichermittel für ein Flag einer eingehenden Anforderung, um ein Flag einer eingehenden Anforderung zu speichern, das angibt, dass eine eingehende Anforderung vorhanden ist, wenn eine Anforderungsnachricht durch das SIP von einer weiteren Vorrichtung in einem Fall erhalten wird, in dem ein solches Flag in dem Flag-Speichermittel gespeichert worden ist; und
ein Angabemittel, um in Reaktion auf die Einrichtung des Kommunikationskanals und auf die SIP-Transaktion die weitere Vorrichtung anzugeben, falls das Flag einer eingehenden Anforderung gesetzt ist.

7. Kommunikationssteuerverfahren zum Bereitstellen eines Kommunikationsdienstes für ein Endgerät (2A, 2B) in einem Zustand, in dem ein Kommunikationskanal eingerichtet worden ist, und einem Zustand, in dem eine SIP-Transaktion eingerichtet worden ist, wobei das Verfahren umfasst:
einen Nachrichtenerhaltungsschritt zum Erhalten einer Anforderungsnachricht durch das SIP von einem anrufenden Endgerät (2A, 2B) in einem Zustand, in dem der Kommunikationskanal nicht eingerichtet worden ist, und einem Zustand, in dem die SIP-Transaktion nicht eingerichtet worden ist;
einen Steuersignal-Sendeschritt zum Senden eines Steuersignals, um ein angerufenes Endgerät (2A, 2B) in Reaktion auf die Erfassung der Anforderungsnachricht in dem Nachrichtengewinnungsschritt zum Einrichten des Kommunikationskanals und zu einem Registrierungsprozess aufzufordern;
einen Kommunikationskanal-Einrichtungsverarbeitungsschritt zum Ausführen eines Prozesses zum Einrichten des Kommunikationskanals, nachdem das Steuersignal in dem Steuersignal-Sendeschritt gesendet worden ist; und
einen SIP-Transaktion-Einrichtungsverarbeitungsschritt zum Ausführen eines Prozesses zum Einrichten einer SIP-Transaktion, nachdem der Kommunikationskanal-Einrichtungsprozess durch den Kommunikationskanal-Einrichtungsverarbeitungsschritt ausgeführt worden ist, **gekennzeichnet durch** einen Schritt, der einen eingehenden Prozess, der einem Identifizierer entspricht, fortsetzt, falls der Identifizierer zum Identifizieren einer **durch** das angerufene Endgerät (2A, 2B) gestarteten Anwendung in einer von dem angerufenen Endgerät (2A, 2B) erhaltenen Antwortnachricht enthalten ist, und der einen Prozess ausführt, um den eingehenden Prozess abzubrechen, falls in der Antwortnachricht ein Grund enthalten ist, aus dem ein Kommunikationskanal-Einrichtungsprozess und ein Registrierungsprozess nicht ausgeführt werden sollen.

## Revendications

1. Serveur SIP (1A, 1 B) pour fournir un service de communication à un appareil terminal (2A, 2B) dans une situation dans laquelle un canal de communication a été établi et une situation dans laquelle une transaction SIP a été établie, ledit serveur (1A, 1 B) comprenant :
un moyen d'obtention de message (11) pour obtenir un message de requête par SIP depuis un appareil terminal appelant (2A, 2B) dans une situation dans laquelle le canal de communication n'a pas été établi et une situation dans laquelle la transaction SIP n'a pas été établie ; et
un moyen d'envoi de signal de commande (12) pour envoyer un signal de commande pour demander l'établissement du canal de communication et une procédure d'enregistrement vers un appareil terminal appelé (2A, 2B) en réponse à la réception du message de requête par ledit moyen d'obtention de message (11), **caractérisé en ce que** ledit serveur SIP est adapté à continuer une procédure entrante correspondant à un identificateur si ledit identificateur pour identifier une application démarrée par l'appareil terminal appelé (2A, 2B) est contenu dans un message de réponse obtenu depuis l'appareil terminal appelé (2A, 2B), et exécuter une procédure pour avorter le processus entrant si une raison pour laquelle une procédure d'établissement de canal de communication et une procédure d'enregistrement ne sont pas exécutées est contenue dans ledit message de réponse.

2. Serveur SIP (1 A, 1 B) selon la revendication 1, comprenant en outre un moyen de stockage d'informations d'identification (13) pour stocker des informations d'identification afin d'identifier de façon unique ledit message de requête provenant de l'appareil terminal appelé (2A, 2B), dans lequel un message de requête correspondant aux informations d'identification stockées dans ledit moyen de stockage d'informations d'identification (13) est envoyé audit appareil terminal appelé (2A, 2B) après avoir changé l'état vers un état dans lequel ledit canal de communication a été établi et ladite transaction SIP a été établie.

3. Serveur SIP selon la revendication 1, comprenant en outre un temporisateur d'attente d'enregistrement (14) qui est démarré quand ledit signal de commande est envoyé, dans lequel ladite procédure d'établissement de transaction SIP est terminée quand ledit temporisateur d'attente d'enregistrement (14) expire.

4. Appareil terminal (2A, 2B) pour obtenir la fourniture d'un service de communication dans une situation dans laquelle un canal de communication a été établi et une situation dans laquelle une transaction SIP a été établie, ledit appareil (2A, 2B) comprenant :
un moyen d'obtention de signal de commande (12) pour obtenir un signal de commande pour demander l'établissement d'un canal de communication et une procédure d'enregistrement ;
un moyen de procédure d'établissement de canal de communication (22) pour exécuter ladite procédure d'établissement de canal de communication en réponse à l'acquisition dudit signal de commande ; et
un moyen de procédure d'enregistrement (23) pour exécuter ladite procédure d'enregistrement après avoir établi le canal de communication par le moyen de procédure d'établissement de canal de communication (22), **caractérisé par** un moyen d'envoi de message de réponse (25) pour envoyer un message de réponse contenant un identificateur pour identifier une application démarrée par l'appareil terminal (2A, 2B) si un moyen de détermination (24) détermine que la procédure d'établissement de canal de communication et ladite procédure d'enregistrement peuvent être exécutées, et pour envoyer un message de réponse contenant une raison pour laquelle ladite procédure d'établissement de canal de communication et ladite procédure d'enregistrement ne doivent pas être exécutées si ladite procédure d'établissement de canal de communication et ladite procédure d'enregistrement ne doivent pas être exécutées.

5. Appareil terminal (2A, 2B) selon la revendication 4, comprenant en outre un moyen d'annulation (26) pour annuler ladite situation dans laquelle le canal de communication a été établi quand ladite situation dans laquelle la transaction SIP a été établie est annulée.

6. Dispositif de gestion d'informations d'abonnés (3) comprenant :
un moyen de stockage de drapeau pour stocker un drapeau qui indique qu'un canal de communication a été établi et un drapeau qui indique qu'une transaction SIP a été établie ;
un moyen de stockage de drapeau de requête entrant pour stocker un drapeau de requête entrant indiquant qu'il existe une requête entrante quand un message de requête par SIP provenant d'un autre dispositif est obtenu, dans un cas dans lequel un tel drapeau a été stocké dans ledit moyen de stockage de drapeau ; et
un moyen de notification pour notifier audit autre appareil en réponse à l'établissement dudit canal de communication et ladite transaction SIP dans le cas dans lequel ledit drapeau de requête entrante est levé.

7. Procédé de commande de communication pour fournir un service de communication à un appareil terminal (2A, 2B) dans une situation dans laquelle un canal de communication a été établi et une situation dans laquelle une transaction SIP a été établie, ledit procédé comprenant :
une étape d'obtention de message pour obtenir un message de requête par SIP depuis un appareil terminal appelant (2A, 2B) dans une situation dans laquelle le canal de communication n'a pas été établi et une situation dans laquelle la transaction SIP n'a pas été établie ;
une étape d'envoi de signal de commande pour envoyer un signal de commande pour demander l'établissement du canal de communication et une procédure d'enregistrement vers un appareil terminal appelé (2A, 2B) en réponse à l'acquisition du message de requête dans ladite étape d'obtention de message ;
une étape de procédure d'établissement de canal de communication pour exécuter une procédure pour établir ledit canal de communication après avoir envoyé ledit signal de commande dans ladite étape d'envoi de signal de commande ; et
une étape de procédure d'établissement de transaction SIP pour exécuter une procédure pour établir une transaction SIP après avoir exécuté la procédure d'établissement de canal de communication par ladite étape de procédure d'établissement de canal de communication,
**caractérisé par** une étape qui poursuit une procédure entrante correspondant à un identificateur si ledit identificateur pour identifier une application démarrée par l'appareil terminal appelé (2A, 2B) est contenu dans un message de réponse obtenu de l'appareil terminal appelé (2A, 2B), et exécute une procédure pour avorter la procédure entrante si une raison pour laquelle une procédure d'établissement de canal de communication et une procédure d'enregistrement ne sont pas exécutées est contenue dans ledit message de réponse.
